Europäisches Patentamt

European Patent Office

Office européen des brevets

(19)

(11) Numéro de publication : **0 126 196**
**B1**

(12) **FASCICULE DE BREVET EUROPÉEN**

(45) Date de publication du fascicule du brevet :
16.06.87

(21) Numéro de dépôt : 83402566.0

(22) Date de dépôt : 30.12.83

(51) Int. Cl.⁴ : **H 04 L 11/20**

(54) **Réseau de commutation temporelle asynchrone permettant les communications point à point, de fusion et de diffusion.**

(30) Priorité : 30.12.82 FR 8222122

(43) Date de publication de la demande :
28.11.84 Bulletin 84/48

(45) Mention de la délivrance du brevet :
16.06.87 Bulletin 87/25

(84) Etats contractants désignés :
BE CH DE GB IT LI NL SE

(56) Documents cités :
EP-A- 0 041 695
EP-A- 0 059 149
INTERNATIONAL SWITCHING SYMPOSIUM, session
42B, ref. 5, 21-25 septembre 1981, pages 1-7, Montréal, CA; M. DEVAULT et al.: "Asynchronous time
division switching: a new concept for ISDN nodes"

(73) Titulaire : **Devault, Michel**
**22, rue de Bourgogne**
**F-22300 Lannion (FR)**

**Gerard, Bernard**
**24 cité des Lauriers Ker Maria-Sulard**
**F-22450 La Roche Derrien (FR)**

**Rouaud, Yvon**
**Les Fontaines A.33**
**F-22300 Lannion (FR)**

(72) Inventeur : **Devault, Michel**
**22, rue de Bourgogne**
**F-22300 Lannion (FR)**
Inventeur : **Gerard, Bernard**
**24 cité des Lauriers Ker Maria-Sulard**
**F-22450 La Roche Derrien (FR)**
Inventeur : **Rouaud, Yvon**
**Les Fontaines A.33**
**F-22300 Lannion (FR)**

(74) Mandataire : **Martinet & Lapoux**
**62, rue des Mathurins**
**F-75008 Paris (FR)**

Jouve, 18, rue St-Denis, 75001 Paris, France

## Description

La présente invention concerne un réseau de commutation multiplex à division du temps, du type asynchrone, destiné à commuter les données numériques appartenant à différents services de communications, tels que le téléphone, la transmission des données, la visiophonie, la télédistribution, etc.

Le principe de la commutation multiplex à division du temps de type asynchrone a déjà été décrit pour un réseau de commutation intégrant le téléphone et la transmission de données, raccordé à des lignes principales multiplex à trames hybrides, c'est-à-dire dont la trame définit des circuits et des paquets (cf. demande de brevet européen EP-A-0 059 149 déposée le 19 février 1982). Ce réseau de commutation est constitué par des équipements terminaux de commutation, TSE, reliés d'une part aux liaisons multiplex principales et d'autre part à un réseau de commutation proprement dit.

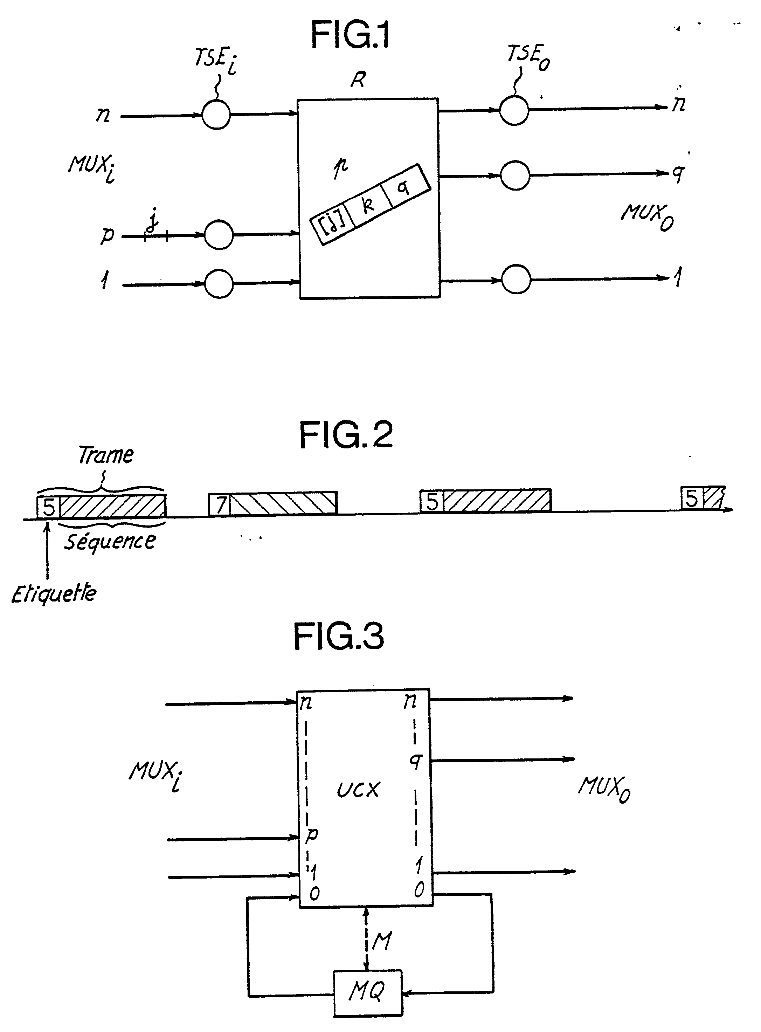

La Fig. 1 donne une représentation unidirectionnelle où les entrées i et les sorties o ont été séparées. Pour commuter le contenu [j] de la voie temporelle asynchrone entrante j, de la liaison multiplex $MUX_{ip}$ à la voie temporelle asynchrone sortante k de la liaison multiplex sortante $MUX_{oq}$, le $TSE_{ip}$ forme un paquet constitué par [j] auquel on ajoute l'adresse de destination qk puis le présente au réseau de commutation R. A l'aide de cette adresse, le réseau de commutation aiguille le paquet vers le $TSE_{oq}$. Le $TSE_{oq}$ insère [j] dans la voie k du $MUX_{oq}$.

L'adresse qk est fournie par une mémoire de commande, locale au $TSE_{ip}$ et adressée à l'aide de j. Il s'agit d'une commande par l'entrée, économique en capacité de mémoire comme on le verra par la suite, et très adaptée aux communications point à point (pj → qk) et aux communications de fusion dans lesquelles plusieurs demandeurs sont connectés à un demandé unique pj, p'j', p"j" ⟶ qk. En revanche, ce mode de commande est inadapté aux connexions de diffusion dans lesquelles un seul demandeur est connecté à une pluralité de demandés.

La commande peut, au contraire, s'effectuer par la sortie. Dans ce cas, l'$TSE_{ip}$ ajoute à j la valeur p de la ligne principale multiplex entrante pour former un paquet d'étiquettes pj qu'il diffuse vers tous les $TSE_o$. Chacun d'eux, par exemple, $TSE_{oq}$, adresse par pj une mémoire de commande qui lui est locale et en déduit le cas échéant, la valeur k de l'étiquette de sortie. Ce mode de commande est très adapté aux connexions de diffusion pj ⟶ qk, q'k', q"k" ; en contrepartie, il est très coûteux en capacité de mémoire de commande comme on le verra par la suite.

L'invention vise à réaliser un réseau de commutation multiplex à division du temps pour réseau de transmission numérique asynchrone qui soit apte à la commutation de diffusion, à la commutation de fusion et à la commutation point à point, et soit cependant économique en capacité de mémoire.

Conformément à l'invention, un réseau de commutation multiplex à division du temps pour réseau de transmission numérique asynchrone est tel que défini dans la revendication 1.

Selon la valeur des trois mots qui composent l'identificateur, les $TSE_i$ acceptent ou n'acceptent pas les paquets.

Si le premier mot indique une communication point à point ou de fusion, on se trouve dans le cas de la commande par l'entrée. Les deuxième et troisième mots sont alors respectivement q et k et ne concernent que le $TSE_{oq}$.

Si le premier mot indique une connexion de diffusion, on se trouve dans le cas de la commande par la sortie. Les $TSE_o$ ignorent alors le deuxième mot mais en revanche, ils exploitent le troisième mot pour adresser chacun, leur propre mémoire de commande qui leur donne, le cas échéant, le numéro de la voie asynchrone sortante.

L'invention va être maintenant décrite en détail en relation avec les dessins annexés dans lesquels :

la Fig. 1   se rapporte à un réseau de commutation temporel asynchrone de l'art antérieur et a été explicité dans l'entrée en matière ;

la Fig. 2   représente le principe d'un réseau de transmission multiplex temporel asynchrone ;

la Fig. 3   représente l'organisation générale du réseau de commutation ;

la Fig. 5   donne l'organisation fonctionnelle de l'équipement terminal de commutation d'entrée $TSE_i$ ;

les Figs. 6A et 6B   donnent l'organisation des équipements terminaux de commutation de sortie $TSE_o$ ;

la Fig. 7   représente la structure matérielle du bus ;

la Fig. 8   représente le schéma fonctionnel de l'allocateur du bus ;

la Fig. 9   présente les formes d'onde des signaux relatifs au bus ;

la Fig. 10   représente sous la forme d'un diagramme de blocs les $TSE_i$ ;

la Fig. 11   donne la structure complète des $TSE_i$ ;

la Fig. 12   représente sous la forme d'un diagramme de blocs les $TSE_o$ ;

la Fig. 13   donne la structure complète des $TSE_o$ ;

Le chapitre I décrit d'une façon générale les structures et le chapitre II décrit d'une façon générale le fonctionnement.


I — Principe du réseau de commutation

I,1. Le multiplexage temporel asynchrone (Fig. 2)

Un multiplexage temporel asynchrone consiste en un entrelacement temporel de « trames » constituées chacune d'une « séquence d'information » et d'une « étiquette ».

Les « trames », « séquences » et « étiquettes » ont une longueur fixe, par exemple respectivement 1 024, 1 016 et 8 bits.

La séquence est une suite de bits qui appartiennent à une voie temporelle asynchrone AC repérée localement dans le multiplex, par l'étiquette. La Fig. 2 représente trois séquences qui appartiennent à l'AC n° 5 et une séquence à l'AC n° 7.

Le transport de l'étiquette avec la séquence supprime la nécessité d'un motif ou arrangement temporel périodique pour identifier une AC. Ceci entraîne que son débit est simplement proportionnel au nombre moyen de trames par unité de temps et qu'il peut donc être quelconque.

Par exemple, avec des séquences de 1 016 bits, le débit peut être de :

| | |
|---|---|
| 2 400 b/s $\cong$ pour | 2,4 trames par seconde |
| 64 kb/s $\cong$ pour | 64 trames par seconde |
| 100 Mb/s $\cong$ pour | 100 000 trames par seconde |

Un exemple de synchronisation au niveau bit et au niveau trames par un séparateur est donné dans la description des TSE (Cf. § II, 22a).

I,2. Organisation fonctionnelle du réseau de commutation (Fig. 3)

Le réseau de commutation a pour rôle d'établir, maintenir puis relâcher des connexions entre des AC entrantes et sortantes supportées par les lignes principales multiplex qu'il raccorde.

La connexion entre l'$AC_i$ d'une ligne principale multiplex entrante p ($MUX_{ip}$) et l'$AC_k$ d'une ligne principale multiplex sortante q ($MUX_{oq}$) consiste, dans le réseau de commutation, à émettre sur $MUX_{oq}$ toutes les trames d'étiquette j reçues sur $MUX_{ip}$ après avoir changé j et k.

Le réseau de commutation se compose de deux sous-ensembles :

— l'unité de commutation UCX, qui raccorde les lignes principales multiplex $MUX_o$ à $MUX_n$ (entrantes vers sortantes) et qui est chargée du démultiplexage, de l'aiguillage puis du multiplexage des trames ;

— le marqueur MQ qui commande l'établissement et la rupture des connexions à l'intérieur de l'UCX et qui, à cette fin est raccordé :

à l'UCX par un accès spécialisé de marquage M ;

aux $MUX_{iO}$ et $MUX_{oO}$ pour échanger les ordres de connexion.

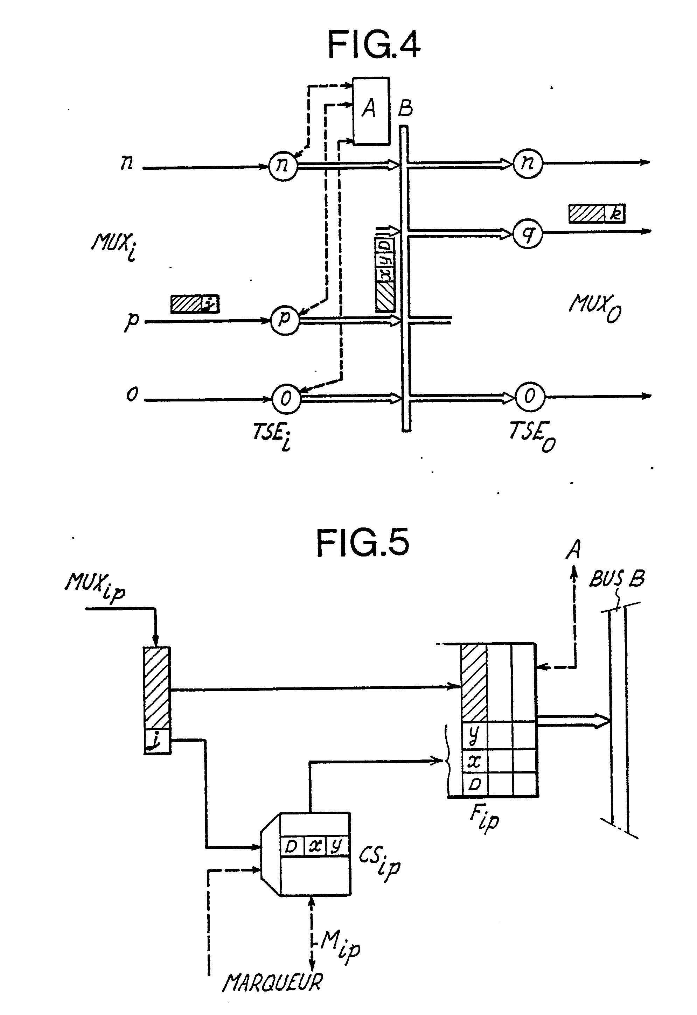

I,3. L'unité de commutation UCX (Fig. 4)

Elle est constituée des équipements terminaux de commutation $TSE_i$ et $TSE_o$ reliés entre eux par un bus B qui constitue le réseau de commutation proprement dit et auxquels sont raccordés les MUX.

L'aiguillage des trames dans l'UCX peut s'effectuer selon deux méthodes : par la sortie ou par l'entrée.

commande par la sortie :

A chaque trame entrante, les $TSE_i$ ajoutent au numéro j de l'AC, le numéro p du $MUX_i$, puis émettent sur le bus, le paquet ainsi formé. L'étiquette globale jp est alors décodée par tous les $TSE_o$ pour reconnaître les trames qui les concernent. A cette fin, on utilise dans chaque $TSE_o$, une mémoire de commande $CS_o$ qui, pour chaque valeur de jp, indique si la trame doit être acceptée en donnant le cas échéant, la nouvelle valeur k de l'AC.

Cette organisation est très adaptée aux communications de diffusion puisque plusieurs $TSE_o$ peuvent accepter le même paquet, mais en contrepartie, elle est coûteuse en mémoire : si l'UCX raccorde n MUX de N AC, chaque $CS_o$ a une capacité de n N mots de $\log_2 N$ bits, soit au total pour n $CS_o$ : $n^2N \log_2$ N bits : c'est-à-dire une capacité globale proportionnelle au carré du nombre des lignes principales multiplex. Avec n = 64 et N = 256 on obtient 8 388 608 bits.

commande par l'entrée :

Pour chaque trame entrante, les $TSE_i$ remplacent j par le numéro global kq de la sortie, grâce à une mémoire de commande $CS_i$. Ensuite, ils émettent sur le bus le paquet qui ne sera accepté que par le $TSE_o$ de numéro q, c'est-à-dire $TSE_{oq}$.

Cette méthode d'aiguillage ne requiert au total que N mots de $\log_2$ n N bits par CS, soit nN $\log_2$Nn bits pour l'UCX, c'est-à-dire une capacité simplement proportionnelle au nombre de MUX, soit 229 376 bits avec n = 64 et n = 256. En revanche, elle est adaptée aux communications de fusion.

La commande retenue dans l'invention, et décrite ci-dessous, est mixte : elle se répartit entre l'entrée et la sortie, ce qui permet d'effectuer des communications de diffusion tout en limitant le volume des mémoires à environ 400 000 bits (pour n = 64 et N = 256).

**0 126 196**

I,31. Le bus B

Son débit est égal au produit du débit des MUX entrants par leur taux de charge. En d'autres termes, le bus B concentre les débits entrants.

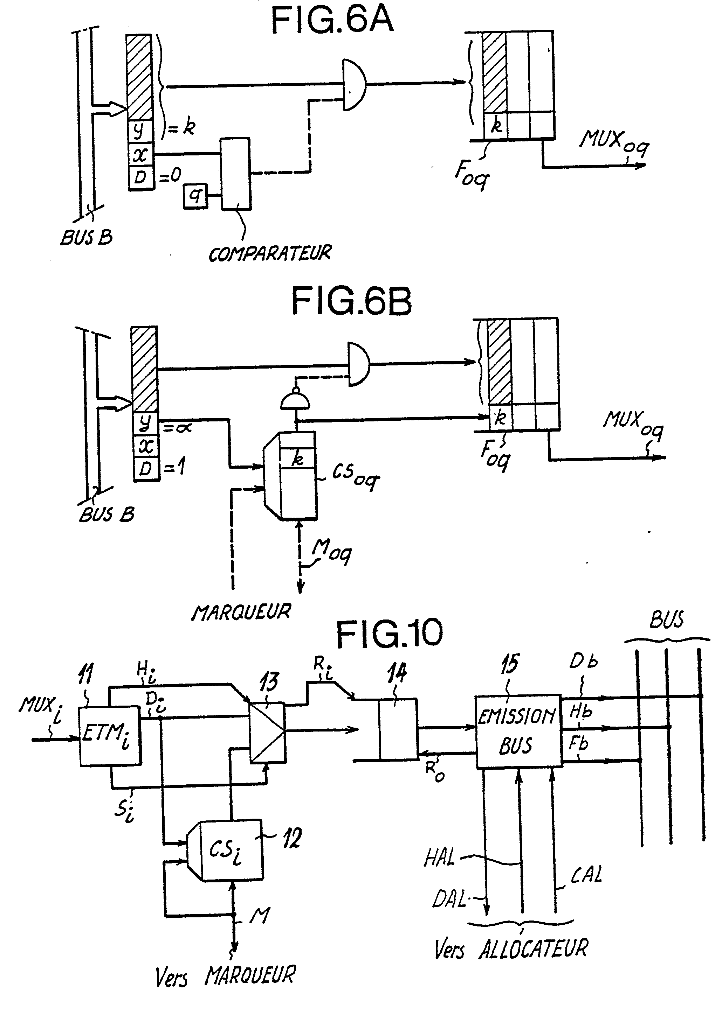

I,32. Les $TSE_i$ (Exemple $TSE_{ip}$ : Fig. 5)

Ils assurent les fonctions suivantes :
— la réception série de trames au débit instantané de la ligne principale multiplex entrante $MUX_{ip}$ ;
— à l'aide d'une mémoire de commande $CS_{ip}$, le transcodage de l'étiquette j de 8 bits en un identificateur de 15 bits, interne au commutateur, et destiné à être décodé dans les $TSE_o$ : cet identificateur de 15 bits comprend un bit D, 6 bits x et 8 bits y.
D indique la nature de la communication :
si D = 0, il s'agit d'une communication point à point (pj $\longrightarrow$ qk) ou de fusion :

$$pj, \ p'j', \ p''j'' \longrightarrow qk$$

Alors : x = q numéro du $MUX_o$, $q \in [0,63]$ et y = k numéro de l'AC sortante, $k \in [0,255]$
si D = 1, il s'agit d'une communication de diffusion (pj $\longrightarrow$ qk, q'k', q''k'').
x n'a pas de signification.

$$y = \alpha \in [0,255]$$

$\alpha$ est, dans le cas de la communication de diffusion :

$$pj \rightarrow qk, \ q'k', \ q''k''$$

une adresse commune dans les trois mémoires inverses de commande $CS_{oq}$, $CS_{oq'}$, $CS_{oq}''$.
le mot d'adresse $\alpha$ dans $CS_{oq}$ est k
le mot d'adresse $\alpha$ dans $CS_{oq}'$ est k'
le mot d'adresse $\alpha$ dans $CS_{oq}''$ est k''.
Mise en file $F_{ip}$. Cette file est destinée à :
— attendre la disponibilité du bus B ;
— effectuer le changement de cadence de bits entre $MUX_i$ et B.
— avec l'autorisation de l'allocateur A (Fig. 4), émettre sur le bus B le paquet (séquence + identificateur) situé en fond de file.

I,33. Les $TSE_o$ (Exemple $TSE_{oq}$ : Figs. 6A et 6B)

Ils analysent les identificateurs de tous les paquets transmis sur le bus pour trier ceux qui doivent être aiguillés vers leur $MUX_o$ qui leur est associé :
si D = 0 (Fig. 6A), le $TSE_o$ compare la variable x à la quantité q. Si x = q, il range la séquence et l'étiquette y = k dans la file $F_{oq}$.
si D = 1 (Fig. 6B) $TSE_o$ utilise y pour adresser les mémoires de commande $CS_{oq}$, $CS_{oq'}$, $CS_{oq}''$ :
s'il existe une connexion, $TSE_{oq}$ fournit la valeur k de l'étiquette sortante et autorise le rangement dans la file $F_{oq}$ ;
s'il n'existe pas de connexion, $TSE_{oq}$ fournit un code particulier (par exemple 1111 1111) qui interdit l'accès à $F_{oq}$.
— émission en série sur $MUX_{oq}$ des trames situées en fond de file $F_{oq}$. Celle-ci est destinée à :
effectuer le changement de débit instantané entre B et $MUX_{oq}$ ;
stocker une éventuelle série de trames arrivées quasi instantanément de plusieurs $MUX_i$.

I,34. Capacité des mémoires

Chaque $CS_i$ et chaque $CS_o$ a respectivement une capacité de $256 \times 15$ bits et $256 \times 8$ bits, soit au total $256 (15 + 8) \times 64 = 376\,832$ bits pour un réseau de commutation de 64 lignes principales multiplex de 256 voies asynchrones chacun.

I,4. Le marqueur MQ

C'est un processeur qui établit ou relâche les connexions en « marquant » les mémoires de commande $CS_i$ et $CS_o$ conformément à des ordres de connexion qu'il reçoit sur le $MUX_{iO}$ dont il accuse réception sur le $MUX_{oO}$.

4

a) connexion point à point (Exemple : pj ⟶ qk)

Le marqueur MQ inscrit : O, q, k, à l'adresse j de la mémoire de commande $CS_{ip}$.

b) connexion de fusion (Exemple : pj, p'j', p"j" ⟶ qk)

Par les liaisons $M_{ip}$, $M_{ip'}$, $M_{ip}$", le marqueur MQ inscrit :
O, q, k, à l'adresse j de $CS_{ip}$
O, q, k, à l'adresse j' de $CS_{ip'}$
O, q, k, à l'adresse j" de $CS_{ip"}$

c) connexion de diffusion (Exemple : pj ⟶ qk, q'k', q"k")

Par la liaison $M_{ip}$, le MQ inscrit : 1, rien, $\alpha$ à l'adresse j de $CS_{ip}$ et par les liaisons $M_{oq}$, $M_{oq}$, $M_{oq'}$, il écrit :
k à l'adresse $\alpha$ de $CS_{oq}$
k' à l'adresse $\alpha$ de $CS_{oq}$
k" à l'adresse $\alpha$ de $CS_{oq}$
Pour relâcher les connexions, le MQ efface par écriture de « FF hexadecimal » dans les mots correspondants de la ou des mémoires de commande.

II — Description de l'UCX

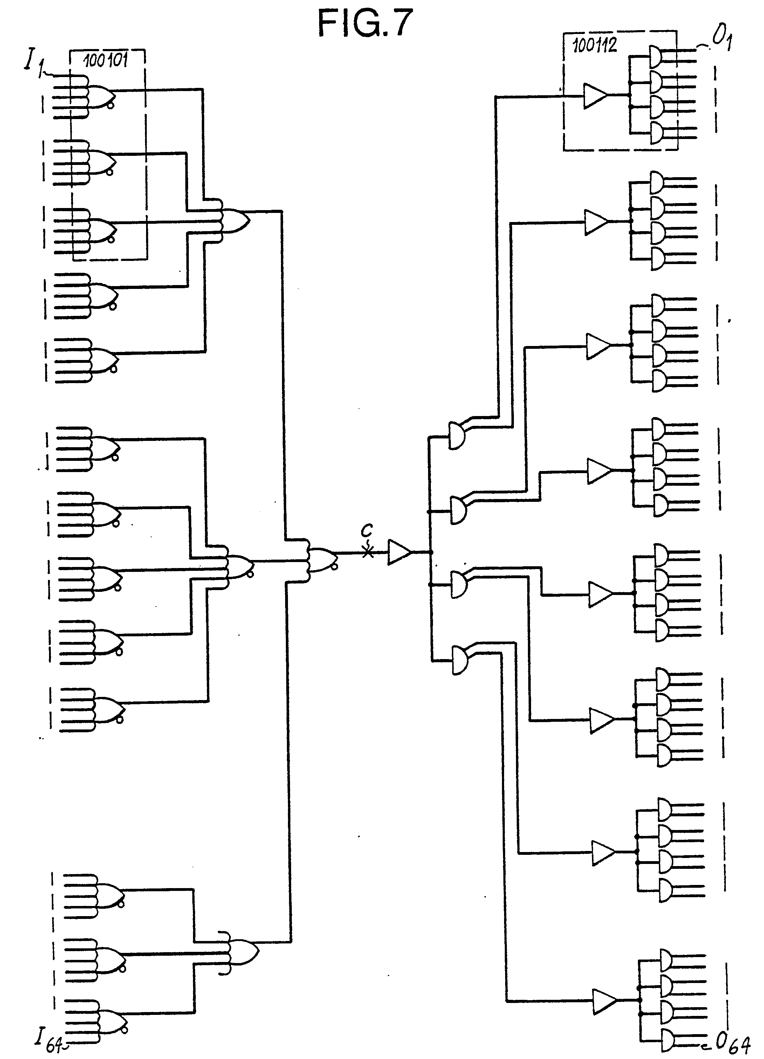

II,1 — Le Bus (Fig. 7)

III,11 — Principe

Le bus assure la diffusion des paquets issus des $TSE_i$ vers tous les $TSE_o$.
Tous les équipements terminaux de commutation sortants sont en permanence à l'écoute sur le bus et, à tout instant, il n'y a qu'un seul équipement terminal de commutation entrant qui soit actif, les autres présentant un état logique inactif pour la fonction OU logique.

II,12 — Description détaillée

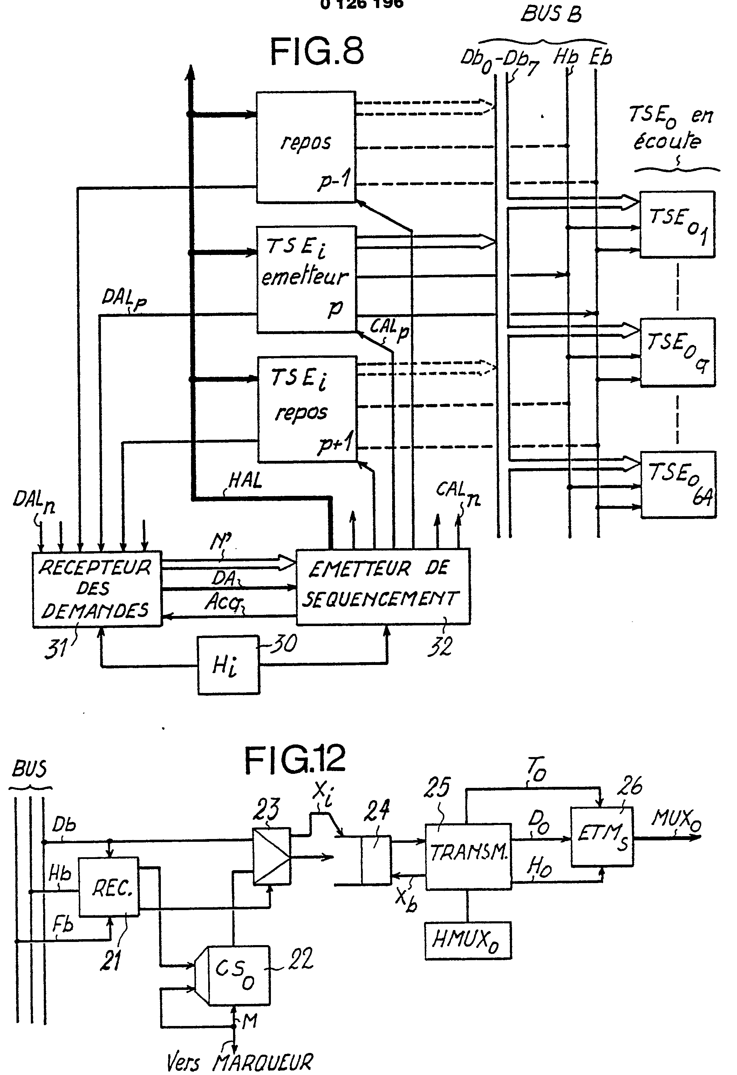

Le débit global du bus de 1,3 Gb/s est écoulé par 8 lignes à 165 Mb/s travaillant en parallèle.
Le bus comporte une ligne pour l'horloge d'échantillonnage et une ligne pour le signal de fin de paquet Fb.
Chacune des 10 lignes de ce faisceau répond à une structure type « diabolo » à 64 entrées et 64 sorties (Cf. Fig. 7) comportant 7 circuits type 100 101 qui assurent la fonction OU logique jusqu'à un point central C d'où 9 circuits type 100 112 effectuent la diffusion vers les sorties.
Pour n'accorder le droit d'émettre qu'à un seul $TSE_i$ à la fois, un allocateur centralisé résout les conflits d'accès. Cet allocateur peut être d'un type connu. Il comprend (Fig. 8) un récepteur 31 des demandes d'accès issues des différents $TSE_i$ qui assure l'acquisition des demandes et la sélection de l'une d'elles par exploration cyclique, un émetteur de séquencement 32 qui reçoit du récepteur 31 l'information « demande présentée » DA et le numéro N' du $TSE_i$ sélecté, émet à destination du $TSE_{iN'}$, le droit d'émission CAL, acquitte la demande vers le récepteur, autorisant ainsi la recherche et la sélection éventuelle d'une nouvelle demande d'accès, et émet en permanence vers tous les $TSE_i$ l'horloge de base HAL pour l'émission sur le bus.
Ces différents signaux répondent au diagramme des temps de la Fig. 9.
Un intervalle minimal d'une période du signal HAL est observé entre deux séquences de HAL afin de tenir compte des aléas de temps de transfert sur le bus en fonction des positions du $TSE_i$ émetteur et du ou des $TSE_o$ concernés.
Une horloge interne $H_i$ 30 pilote les deux mécanismes précédents.

II,2 — Equipement terminal de commutation d'entrée : $TSE_i$

II,21 — Organisation fonctionnelle

Le $TSE_{ip}$ reçoit d'une ligne principale multiplex série asynchrone d'indice p, $MUX_{ip}$, des trames d'étiquettes pj et émet sur le bus, sous forme de mots parallèles de 8 bits, des paquets de type (D, x, y).
Un $TSE_i$ se compose (Fig. 10) d'un équipement terminal de multiplex entrant 11 dont le rôle est de séparer, dans le signal du multiplex entrant $MUX_i$, les données constitutives de la séquence Di, l'horloge d'échantillonnage Hi, et le signal de synchronisation de trame Si, et de générer le séquencement d'entrée.
L'équipement terminal de commutation d'entrée $TSE_{ip}$ comprend aussi une mémoire de commande 12 de 256 mots de 15 bits pour la transformation pj → D, x, y munie de son dispositif d'accès au marqueur, un ensemble 13 assurant les fonctions de conversion série parallèle des données entrantes, de multiplexage de l'en-tête [D, x, y] et de présentation à la file d'attente 14.

Enfin, l'équipement terminal de commutation d'entrée comprend une file d'attente 14 assurant, par stockage de mots de 32 bits, le changement de cadence entre le $MUX_i$ et le bus B, c'est-à-dire la réception des données entrantes munies de l'en-tête D, x, y à un rythme Ri compatible avec la cadence-bit du multiplex entrant, le stockage de 32 mots de 32 bits nécessaires à la constitution d'un paquet entier destiné à être émis sur le bus, la mémorisation des mots appartenant à des séquences suivantes, susceptibles d'arriver sur le $TSE_i$ pendant la période d'attente de l'autorisation d'émettre sur le bus et l'émission des données constitutives d'un paquet à un rythme Ro compatible avec celui du bus.

L'envoi d'un paquet sur le bus 15 provoque l'envoi vers l'allocateur des demandes d'accès au bus (DAL), la réception, en retour, des informations de rythme (HAL) et de l'autorisation d'émettre (CAL) et l'émission synchronisée des signaux sur le bus : Données Db, Horloge Hb et Fin de paquet Fb.

II,22 — Description détaillée (Fig. 11)

L'équipement terminal de multiplex entrant 11 se compose d'un dispositif de détection 111 permettant d'extraire du signal composite, les données NRZ Di, l'horloge d'échantillonnage Hi et le signal de synchronisation de trame Si. Le $TSE_i$ exploite par exemple le principe de codage MANCHESTER II avec horloge lente en l'absence de données décrit dans « Un réseau local de vidéocommunications en anneau à commutation de paquets, le projet AMBRE § 3.2 JP COUDREUSE IDATE 81 ».

Un générateur de séquencement 112 remis à zéro par la synchronisation de trame Si délivre par comptage de Hi, aux ensembles 12 et 13 les impulsions nécessaires.

En ce qui concerne la notation des temps entre deux remises à zéro du générateur de séquencement 112, les nombres sans ponctuation particulière sont des temps d'action unique, les nombres entre crochets indiquent une période de temps avec ses limites incluses et les nombres entre parenthèses représentent des impulsions congruentes modulo 32 ; exemple (β) : tous les temps $\beta + 32 m$ (m entier).

La mémoire de commande 12 est composée des circuits de mémoire proprement dits 121, soit 4 circuits 256 x 4 type 100422, montés en parallèle, d'un registre à décalage de 24 bits, 122, à chargement série et parallèle, et lecture parallèle, permettant de recevoir les ordres d'écriture issus du marqueur et de contenir les informations à retourner après lecture. Ce registre contient 8 bits d'adresse, 1 bit de type de l'accès — lecture ou écriture — et 15 bits de données lues ou à écrire.

L'ensemble des liaisons M avec le marqueur se décomposent en :
— une liaison $M_c$ de chargement série du registre 122 ;
— une liaison $M_l$ de lecture série du registre 122 ;
— une liaison $M_h$ d'horloge ;
— une liaison $M_s$ de synchronisation des échanges.

La mémoire de commande 12 comporte également une logique de commande 123 assurant la prise en compte des ordres du marqueur, le règlement des conflits d'accès à la mémoire, l'exécution de l'accès demandé par présentation de l'adresse issue du registre 122, le positionnement de la mémoire en lecture ou écriture par ouverture de la porte 125, l'enregistrement des données éventuellement lues et la remise à zéro du fil $M_s$ signalant au marqueur la fin de l'opération demandée.

L'ensemble 13 comporte un registre 131 de conversion série parallèle à 8 bits recevant au rythme $H_i$ les données $D_i$. Les données entrantes sont ensuite enregistrées par mots de 8 bits aux temps (25) et (33) dans les registres 135 et 136 et, via le multiplexeur 132, dans les registres 133 et 134 aux temps (9) et (17).

D'autre part, en début de réception de trame, l'étiquette j est enregistrée sur un registre 137 au temps (9) et présenté via le multiplexeur 124 comme adresse à la mémoire de commande 121.

La mémoire de commande 121 étant en technologie ECL, l'étiquette interne D, x, y est disponible environ 14 μs après la présentation de j, soit au temps 14.

Aux temps (31) et (33), l'étiquette D, x, y est chargée dans les registres 133 et 134 via les multiplexeurs 138 et 132. Tous les temps (33) l'ensemble des 32 bits des registres 133 à 136 étant prêt, un signal $R_i$ de présentation à la file d'attente est généré.

Pour satisfaire les contraintes de débit, la file d'attente 14 est réalisée à l'aide d'une mémoire RAM ECL 141 de 256 mots de 32 bits (soit 8 circuits ECL 256 x 4 type 100422) contrôlée par une circuiterie de gestion 142 qui génère les adresses et le signal de lecture ou d'écriture.

Un registre d'entrée 143 et deux registres de sortie 144 et 145 de 32 bits chacun assurent les mémorisations temporaires nécessaires à la synchronisation des accès mémoires, en fonction des demandes asynchrones d'entrée en file et de sortie $R_i$ et $R_o$.

Le bloc d'accès au bus 15 comporte un séquenceur 151, recevant du circuit de gestion 142 de la file d'attente 142 le signal UB lorsqu'un paquet entier, stocké en file, est prêt pour être émis sans interruption au rythme du bus.

A la réception du signal UB, le séquenceur 151 génère vers l'allocateur une demande d'allocation du bus DAL.

Lorsque cette requête est satisfaite, l'allocateur envoie vers le $TSE_i$ demandeur choisi le signal d'autorisation d'émettre CAL.

A l'aide du rythme de l'horloge de base HAL reçu en permanence par tous les $TSE_i$, le séquenceur

entame alors la phase d'émission sur le bus.

Par le signal $R_o$, le mot de fond de pile, disponible dans le registre 145, est mémorisé dans le registre de sortie 152 tandis qu'une demande de sortie nouvelle est envoyée au circuit de gestion 142.

Ce mot est ensuite démultiplexé en 4 octets dans le registre 153 *via* le multiplexeur 154, et émis sur le bus au rythme de HB dérivé de HAL.

Lorsque tous les mots du paquet sont émis, l'information fin de paquet (signal Fb) est émise sur le bus.

Les portes 155, 156 et 157 validées pendant la phase d'émission, permettent, une fois celle-ci terminée de présenter sur le bus le zéro logique nécessaire au fonctionnement correct du OU logique, principe du bus.

## II,3. Equipement terminal de commutation de sortie $TSE_o$

### II,31. Organisation fonctionnelle

Le $TSE_{oq}$ reconnaît, parmi les paquets émis sur le bus ceux qui lui sont destinés personnellement pour les communications point à point, lorsque x = q et les paquets de diffusion dont il est co-destinataire, c'est-à-dire dont il a connaissance du code $\alpha$. Puis il retransmet sur la ligne principale multiplex série asynchrone d'indice q qui lui est associée des trames d'étiquette qk.

Le $TSE_{oq}$ se compose (Fig. 12) :

a) d'un ensemble de réception 21 assurant les discriminations d'étiquettes et la génération du séquencement qui s'ensuit.

b) d'une mémoire de commande 22 de 256 mots de 8 bits pour la conversion $\alpha \rightarrow k$, munie de son dispositif d'accès au marqueur.

c) d'un ensemble 23 assurant les fonctions de multiplexage de k et de présentation des données à la file d'attente.

d) d'une file d'attente 24 qui assure, par stockage de mots de 32 bits, deux fonctions :

1) le changement de cadence de bits entre le bus et la ligne principale multiplex sortante, à savoir la réception des trames munies de leur étiquette de sortie k, à un rythme $X_i$ compatible avec leur transfert sur le bus et la sortie des trames vers le $MUX_o$ au rythme $X_o$ issu de l'horloge de base.

2) la mise en attente de séries de paquets possibles, reçus « quasi-instantanément » de TSE,s, c'est-à-dire éventuellement sans interruption au rythme bus $X_i$.

e) un circuit d'émission 25 qui assure la conversion parallèle-série et l'émission des trames sous la commande de l'horloge $H_o$ de ligne principale multiplex sortante.

f) un équipement terminal de multiplex sortant 26 permettant de générer un signal composite sur $MUX_o$ à partir des données sortantes $D_o$, de l'horloge $H_o$ et du signal de synchronisation de trame $T_o$.

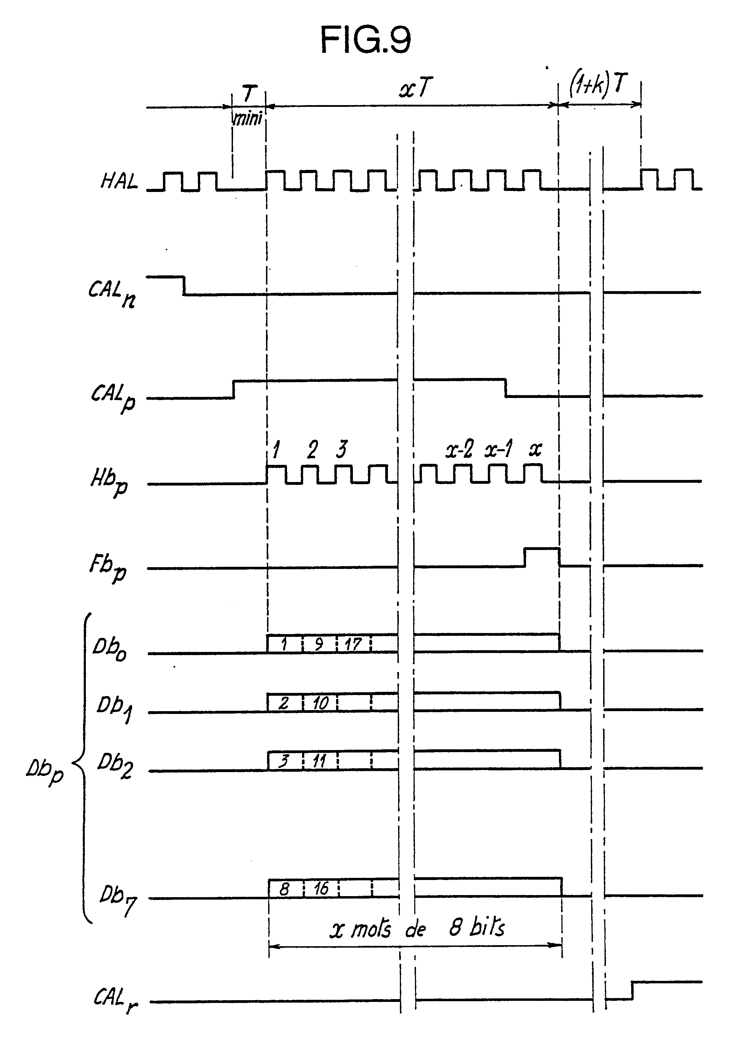

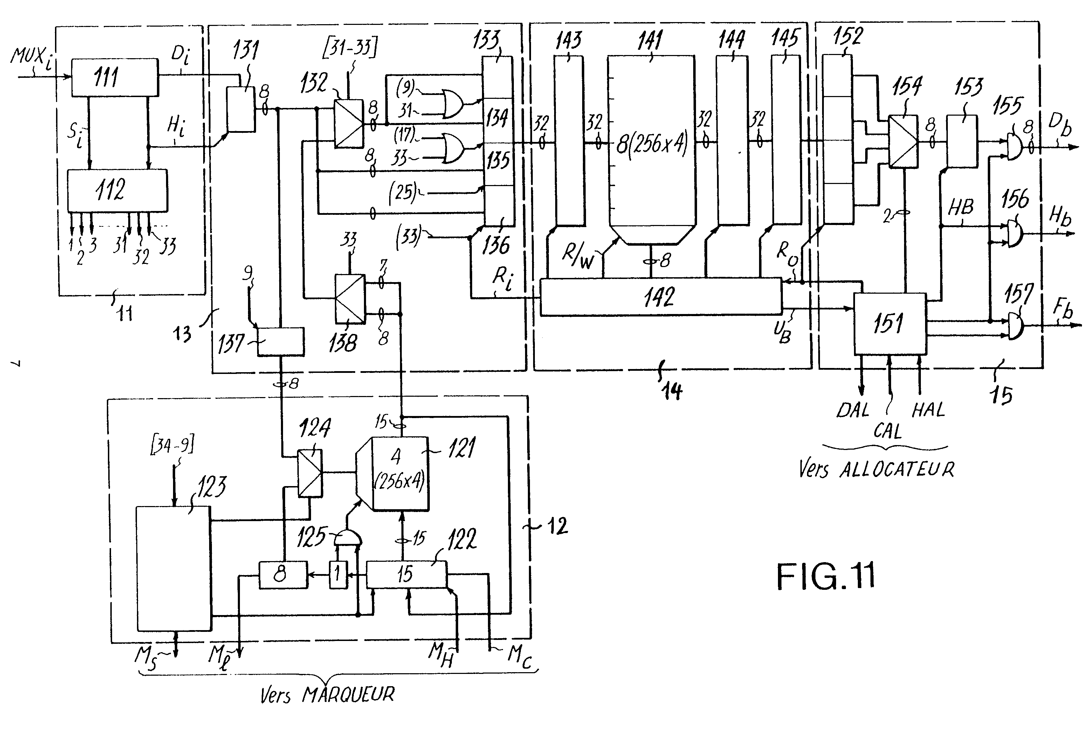

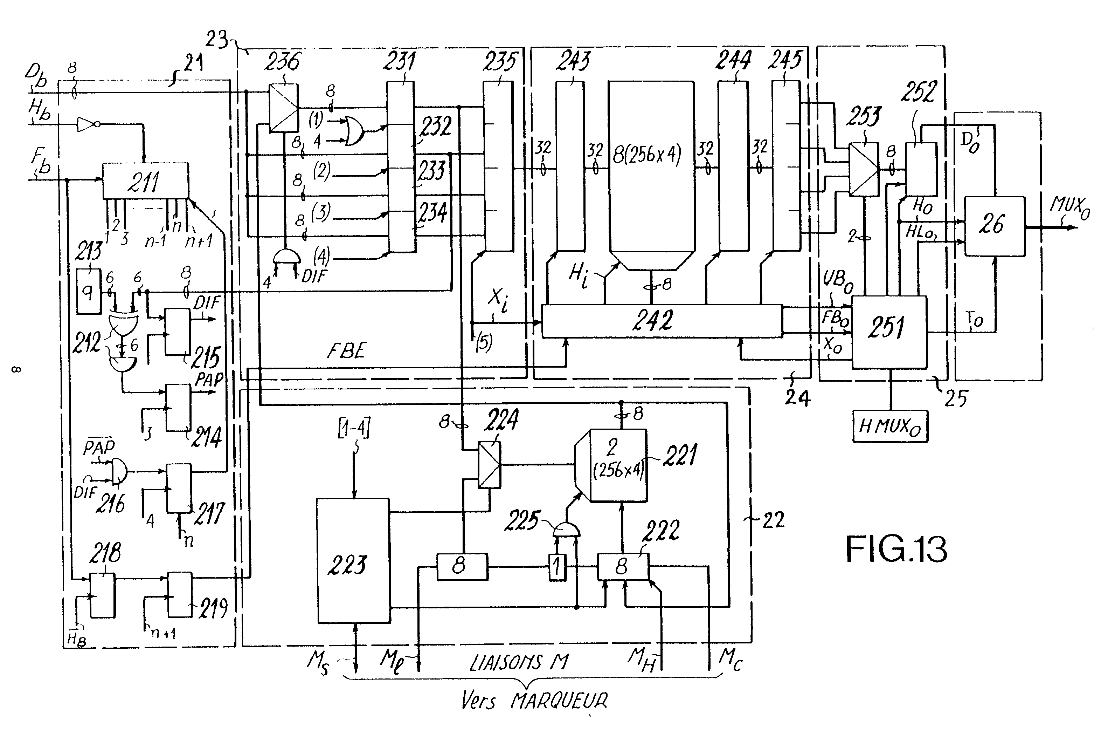

### II,32. Description détaillée (Fig. 13)

a) l'ensemble de réception 21 comporte une base de temps 211 qui, par comptage de $H_B$, synchronisé par $F_B$ délivre aux circuits 22 et 23 les références temporelles nécessaires.

Les temps entre parenthèses sont congruents modulo 4.

La partie D, x de l'étiquette est enregistrée au temps 1 dans le registre 231, puis le paramètre x est comparé dans le comparateur 212, au numéro q du $TSE_o$ contenu dans le registre 213.

Au temps 3 :

— si cette comparaison est positive, la bascule 214 délivre le signal PAP de caractérisation de communication point à point.

— si le paramètre D est égal à 1, la bascule 215 délivre le signal DIF caractéristique d'une communication de diffusion.

Si ni l'une ni l'autre des ces conditions ne sont satisfaites, le $TSE_{oq}$ n'est pas concerné par la trame en cours de transmission sur le bus et, par l'intermédiaire de la porte 216, la bascule 217 génère au temps 4, le signal de blocage du générateur de temps 211, et donc du mécanisme de réception.

Les deux bascules 218 et 219 permettent de mettre en phase le signal fin de paquet transmis sur le bus et de re-synchroniser la file d'attente.

b) la mémoire de commande 22 est composée des circuits mémoire proprement dits 221, soit 2 circuits 256 x 4 type 100122 en parallèle et d'un registre à décalage de 17 bits 222 à chargement en série et en parallèle et lecture parallèle pour dialogue avec le marqueur.

Ce registre 222 contient 8 bits d'adresse 1 bit de type d'accès et 8 bits de données. La logique de commande 223 assure la synchronisation, lors de la phase [1-4] de transformation $\alpha \longrightarrow k$, des accès marqueurs par positionnement du multiplexeur 224 et action sur le registre 222 et la porte 225.

c) l'ensemble 23 se compose de 4 registres 231 à 234, chargés respectivement aux temps (1) à (4), pour le passage du format octet sur le bus, au format 32 bits dans la file d'attente.

Lorsque ces 4 registres sont chargés, leur contenu est transféré au temps (5) dans le registre 235 pour être présenté à la cadence X, à la file d'attente 24.

Le multiplexeur 236 permet d'introduire dans le registre 231, au temps 4, l'étiquette k d'une communication de diffusion dont le code α a été présenté comme adresse à la mémoire de commande 221, 18 nanosecondes plus tôt.

d) la file d'attente 24 est réalisée à l'aide d'une mémoire RAM ECL de 256 mots de 32 bits 241 (soit 8 circuits 256 x 4 type 100422) contrôlée par une circuiterie de gestion 242.

Les registres 243, 244 et 245 assurent les mémorisations nécessaires aux accès asynchrones sur ordre des signaux $X_i$ et $X_o$.

e) le circuit d'émission 25 répond au fonctionnement suivant :

Dès qu'un paquet est prêt à sortir, le circuit de gestion de file 242 génère le signal $UB_o$.

Sous commande du séquenceur 251 piloté par l'horloge de base du multiplex sortant $HMUX_o$, les mots constitutifs du paquet sont multiplexés en octets dans le registre 242 *via* le multiplexeur 253, puis sortis en série $D_o$ au rythme $H_o$.

Resynchronisé par le signal fin de paquet sortant $FB_o$, le séquenceur génère la synchronisation de trame $T_o$ à destination de l'équipement terminal de multiplex sortant 26.

f) celui-ci forme, à partir des données NRZ, $D_o$, un signal composite appliqué à $MUX_o$ qui contient en outre la cadence-bit $H_o$ codé MANCHESTER II et les périodes d'inter trames caractérisées par le rythme d'horloge lente $HL_o$.

## Revendications

1. Réseau de commutation multiplex à division du temps pour réseau de transmission numérique asynchrone comprenant :

une pluralité de lignes principales multiplex entrantes composées chacune ($MUX_{op}$) de voies asynchrones ($AC_i$) véhiculant des paquets composés de données et d'une étiquette (j) et une pluralité de lignes principales multiplex sortantes composées chacune ($MUX_{oq}$) de voies asynchrones ($AC_k$) véhiculant des paquets composés de données et d'une étiquette (k) ;

des équipements terminaux de commutation d'entrée ($TSE_i$) et de sortie ($TSE_o$) connectés respectivement auxdites lignes principales multiplex entrantes et sortantes ;

un bus B reliant entre eux les équipements terminaux de commutation d'entrée et de sortie ;

caractérisé en ce que, l'étiquette (j) de chaque voie asynchrone d'entrée est convertie dans l'équipement terminal de commutation d'entrée respectif ($TSE_i$) au moyen d'une mémoire de commande ($CS_i$, 12) en un identificateur (D, x, y) destiné à être décodé dans les équipements terminaux de commutation de sortie et composé de trois mots, un premier mot (D) caractérisant la nature de la commutation point à point dans laquelle un demandeur unique est à commuter à un demandé unique, de fusion dans laquelle une pluralité de demandeurs sont à commuter à un demandé unique, de diffusion dans laquelle un demandeur unique est à commuter à une pluralité de demandeurs, un deuxième mot (x) soit désignant le numéro (q) de la ligne principale multiplex de sortie de destination soit sans signification selon la valeur du premier mot, et un troisième mot (y) caractérisant soit le numéro (k) de la voie asynchrone sortante de destination, soit les numéros (k, k', k'') de plusieurs voies asynchrones sortantes dans le cas d'une commutation de diffusion (D = 1), et en ce que des moyens (21, 23) de décodage de l'identificateur (D, x, y) sont prévus dans chaque équipement terminal de commutation de sortie ($TSE_o$) pour permettre, d'une part, de reconnaître les paquets qui sont destinés audit équipement en fonction des second et troisième mots (x, y) de l'identificateur et, d'autre part, à une mémoire de commande ($CS_o$, 22) dans ledit équipement, de traiter les paquets reconnus en fonction du premier mot (D) caractérisant la nature de la commutation.

2. Réseau de commutation multiplex à division du temps conforme à la revendication 1, caractérisé en ce que, si le premier mot indique une commutation point à point ou de fusion (D = 0), on se trouve dans le cas de la commande par l'entrée des équipements terminaux de commutation de sortie ($TSE_o$), les deuxième et troisième mots (x, y) étant le numéro (q) de la ligne multiplex de sortie et le numéro (k) de la voie asynchrone sortante respectivement et, si le premier mot indique une connexion de diffusion (D = 1), on se trouve dans le cas de la commande par la sortie des équipements terminaux de sortie, ces derniers ignorant alors le deuxième mot (x) mais exploitant le troisième mot (y) pour adresser chacun, leur propre mémoire de commande ($CS_o$, 12) à une adresse prédéterminée (α) qui leur donne, le numéro (k, k', k'') de la voie asynchrone sortante.

## Claims

1. Time division multiplex switching network for asynchronous digital transmission system comprising :

a plurality of incoming multiplex highways each ($MUX_{op}$) including asynchronous channels ($AC_i$) carrying packets made up of data and a label (j) and a plurality of outgoing multiplex highways each ($MUX_{oq}$) including asynchronous channels ($AC_k$) carrying packets made up of data and a label (k) ;

incoming ($TSE_i$) and outgoing ($TSE_o$) switching terminal equipments respectively connected to said incoming and outgoing multiplex highways ;

a bus (B) interconnecting the incoming and outgoing multiplex highways ;
characterized in that the label (j) of each incoming asynchronous channel is in the respective incoming switching terminal equipment (TSE$_i$) converted by means of a control memory (CS$_i$, 12) into an identifier (D, x, y) intended to be decoded in the outgoing switching terminal equipment and composed of three words, a first word (D) characterizing the kind of switching communication as being selecting from point-to-point switching in which a single calling party is to be switched to a single called party, concentration switching in which several calling parties are to be switched to a single called party, diffusion switching in which a single calling party is to be switched to several calling parties, a second word (x) selecting the number (q) of the addressed outgoing multiplex highway or not having any significance according to the first word value, and a third word (y) characterizing the number (k) of the addressed outgoing asynchronous channel, or the numbers (k, k', k") of several outgoing asynchronous channels in the case of a diffusing switching (D = 1), and in that means (21, 23) for decoding the identifier (D, x, y) are provided in each outgoing switching terminal equipment (TSE$_o$) in order to allow, on the one hand, the recognition of the packets which are intended for said equipment as a function of the second and third words (x, y) of the identifier and, on the other hand, to a control memory (CS$_o$, 22) in said equipment, to process the recognized packets as a function of the first word (d) characterizing the kind of the switching.

2. Time division multiplex switching network according to claim 1, characterized in that, if the first word indicates a point-to-point or a concentration switching (D = 0), the control is made by the input of the incoming switching terminal equipments (TSE$_o$), the second and third words (x, y) being the outgoing multiplex highway number (q) and the outgoing asynchronous channel number (k) respectively and, if the first word indicates a diffusion connection (D = 1), the control is made by the output of the outgoing switching terminal equipments, these last ones being then unaware of the second word (x) but using the third word (y) for each addressing its own control memory (CS$_o$, 12) at a predeterminal address ($\alpha$) which furnishes the asynchronous outgoing channel number (k, k', k").

**Patentansprüche**

1. Asynchrones Zeitmultiplex-Koppelfeld für digitale Übertragungsnetzwerke mit :
einer Vielzahl von Multiplex-Haupteingangsleitungen (MUX$_{op}$), jede aus asynchronen Leitungen (AC$_i$) bestehend, welche Pakete, die aus einem Daten- und einem Kennzeichnungsteil (j) zusammengesetzt sind, transportieren, und einer Vielzahl von Multiplex-Hauptausgangsleitungen (MUX$_{oq}$), jede aus asynchronen Leitungen (AC$_k$) bestehend, welche Pakete transportieren, die aus einem Daten- und einem Kennzeichnungsteil (k) zusammengesetzt sind ;
Endschalteinrichtungen des Eingangs (TSE$_i$) und des Ausgangs (TSE$_o$), die die oben beschriebenen Multiplex-Haupteingangs- und Hauptausgangsleitungen miteinander verbinden ;
einem Bus (B), der die Endschalteinrichtungen des Eingangs und des Ausgangs unter sich verbindet, dadurch gekennzeichnet, daß die Kennzeichnung (j) jeder asynchronen Eingangsleitung in den jeweiligen Endschalteinrichtungen (TSE$_i$) des Eingangs mittels eines Steuerspeichers (CS$_i$, 12) umgewandelt wird in eine Kennzeichnung (D, x, y), die in den Endschalteinrichtungen des Ausgangs ausgewertet wird, bestehend aus drei Worten, einem ersten Wort (D), das die Verbindungsart kennzeichnet, in der bei der Punkt-zu-Punkt-Verbindung ein einzelner Teilnehmer mit einem anderen einzelnen Teilnehmer verbunden wird, bei der Mehrpunktverbindung mehrere Teilnehmer mit einem einzelnen Teilnehmer verbunden werden und bei der Rundsendeverbindung ein Teilnehmer mit mehreren Teilnehmern verbunden wird, einem zweiten Wort (x), das abhängig vom Wert des ersten Wortes entweder ohne Bedeutung ist oder die Nummer (q) der Ziel-Multiplex-Hauptausgangsleitung bezeichnet, und einem dritten Wort (y), das entweder die Nummer (k) der asynchronen Zielausgangsleitung oder die Nummern (k, k', k") von mehreren asynchronen Ausgangsleitungen im Falle einer Mehrpunktverbindung (D = 1) bezeichnet, und dadurch gekennzeichnet, daß die Mittel (21, 23) für die Entschlüsselung der Kennzeichnung (D, x, y) in jeder Endschalteinrichtung des Ausgangs (TSE$_o$) vorgesehen sind, um einerseits in Abhängigkeit vom Wert des zweiten und dritten Wortes (x, y) der Kennzeichnung die Pakete zu erkennen, die für diese Einrichtung bestimmt sind, und andererseits, um mit einem Steuerspeicher (CS$_o$, 22) in dieser Einrichtung die erkannten Pakete gemäß der Angabe des ersten Wortes (D) entsprechend zu behandeln.

2. Zeitmultiplex-Koppelfeld gemäß Anspruch 1, dadurch gekennzeichnet, daß im Falle, daß das erste Wort eine Punkt-zu-Punkt- oder Mehrpunktverbindung (D = 0) anzeigt, im Fall der Steuerung durch den Eingang der Endschalteinrichtungen des Ausgangs (TSE$_o$) das zweite und dritte Wort (x, y) die Nummer (q) der Multiplexausgangsleitung und die Nummer (k) der asynchronen Ausgangsleitung darstellen, und daß im Falle, daß das erste Wort eine Rundsendeverbindung (D = 1) anzeigt, im Fall der Steuerung durch den Ausgang der Endschalteinrichtungen des Ausgangs das zweite Wort (x) ohne Bedeutung ist, aber das dritte Wort (y) ausgewertet wird, um jeden ihrer eigenen Steuerspeicher (CS$_o$, 12) mit einer vorgegebenen Adresse zu belegen, die ihm die Nummer (k, k', k") der asynchronen Ausgangsleitung anzeigt.

# FIG.1

# FIG.2

Trame
Séquence
Etiquette

# FIG.3

# FIG.4

# FIG.5

# FIG.6A

$= k$

$= 0$

$q$

BUS B

COMPARATEUR

$F_{oq}$

$MUX_{oq}$

# FIG.6B

$= \alpha$

$= 1$

BUS B

$CS_{oq}$

$M_{oq}$

MARQUEUR

$F_{oq}$

$MUX_{oq}$

# FIG.10

$MUX_i$

$11$ $ETM_i$

$H_i$

$D_i$

$13$

$R_i$

$14$

$R_o$

$15$ EMISSION BUS

$D b$

$H b$

$F b$

BUS

$S_i$

$12$ $CS_i$

$M$

Vers MARQUEUR

HAL

DAL

CAL

Vers ALLOCATEUR

3

# FIG.7

# FIG.8

BUS B

$Db_0 - Db_7$  Hb  Eb

$TSE_0$ en écoute

repos

p-1

$TSE_i$ emetteur p

$DAL_p$

$CAL_p$

$TSE_i$ repos

p+1

HAL

$DAL_n$

$CAL_n$

N'

DA

Acq

RECEPTEUR DES DEMANDES

EMETTEUR DE SEQUENCEMENT

31

$H_i$

30

32

$TSE_{O1}$

$TSE_{Oq}$

$TSE_{O64}$

# FIG.12

BUS

Db

Hb

Fb

REC.

21

23

$X_i$

24

$CS_O$

22

Vers MARQUEUR

M

$X'_b$

25

TRANSM.

HMUX$_O$

$T_O$

$D_O$

$H_O$

26

ETM$_S$

MUX$_O$

# FIG.9

FIG.11

Vers ALLOCATEUR

Vers MARQUEUR

0 126 196

FIG.13

0 126 196